# EUROPÄISCHE PATENTANMELDUNG

(11) **EP 0 872 932 A2**
(43) Veröffentlichungstag der Anmeldung: **21.10.1998**
(21) Anmeldenummer: 98107005.5
(22) Anmeldetag: 16.04.1998
(51) Int. Cl.: H02B 11/127

(54) **Verriegelungseinrichtung für die Sicherungslastschaltleisten eines Schaltschrankes zur Verteilung elektrischer Energie**

(30) Priorität: 18.04.1997 DE 29707022 U
(71) Anmelder: Humboldt-Lotz Elektrotechnik GmbH, 50933 Köln (DE)
(72) Erfinder: Wittmann, Heinz Richard, D-51067, Köln (DE)
(74) Vertreter: Christl, Hermann, Dipl.-Ing.

(57) **Zusammenfassung**

Um für die in ein Niederspannungs-Abgangsfeld eines Schaltschrankes eingeschobenen Sicherungslastschaltleisten zur Verteilung elektrischer Energie eine Verriegelungseinrichtung zu schaffen, die für die Montageperson bzw. Bedienungsperson in jedem Fall ein sicheres spannungsfreies und doch einfaches schnelles Montieren und Auswechseln der einzelnen Sicherungsschaltleisten ermöglicht, wird erfindungsgemäß vorgeschlagen, daß jede Sicherungsschaltleiste (16 bis 20) eine drehbar gelagerte Verriegelungs-Welle (33) aufweist, welche an ihrem Umfang drei axial und umfangsmäßig zueinander versetzte Stellungsnocken (1, 2, 3) aufweist, die mit in der Sicherungsschaltleiste angeordneten Anschlägen (34, 35) zusammenwirken, so daß durch manuelle Drehung der Verriegelungs-Welle (33) um jeweils einen 90°-Kreisbogenabschnitt die Welle und damit die Sicherungsschaltleiste in vier definierte Stellungen (1) Einfahren, (2) Verriegeln, (3) Trennen und (4) Ausfahren der Sicherungsschaltleisten (16 bis 20) schaltbar ist.

## Beschreibung

Die Erfindung betrifft eine Verriegelungseinrichtung für die in ein Niederspannungs-Abgangsfeld eines Schaltschrankes eingeschobenen Sicherungslastschaltleisten zur Verteilung elektrischer Energie auf mehrere Drehstromverbraucher.

In Produktionsstätten mit vielen Drehstromverbrauchern, insbesondere in Fabriken mit Produktionsstraßen wie z. B. in der Automobilindustrie dienen Niederspannungs-Schaltfeldeinrichtungen zur Verteilung der elektrischen Energie von der Stromversorgungs-Sammelschiene auf die verschiedenen Stromverbraucher wie z. B. Werkzeugmaschinen, Roboter etc.. Solche Niederspannungs-Schaltfeldeinrichtungen bestehen aus einem Schaltschrank, der an die Sammelschiene angeschlossen ist und in den in der Regel nebeneinanderliegend mehrere Sicherungslastschaltleisten mit jeweils drei Stromabgängen zu den einzelnen Drehstromverbrauchern eingeschoben sind. Diese Sicherungsschaltleisten weisen rückseitig elektrische Kontakte auf, mittels denen sie mit entsprechenden Kontakten des Schaltschrankes elektrisch verbindbar sind. Auf diese Weise kann der über die Sammelschiene herangeführte Strom mit z. B. 4000 A über z. B. 10 Sicherungsschaltleisten auf entsprechend 10 Verbraucher mit jeweils 630 A (400 V) verteilt werden.

In Störungsfällen, z. B. im Fall eines Kurzschlusses in einer oder mehrerer der Sicherungsschaltleisteneinheiten kommt es darauf an, daß die jeweils betroffene Sicherungsschaltleiste möglichst schnell und betriebssicher ausgewechselt werden kann, um zum einen Betriebsunterbrechungen so kurz wie möglich zu halten und zum anderen die Handhabung der oft schwergewichtigen Sicherungsschaltleisten für die Montagepersion so sicher wie möglich zu machen.

Der Erfindung liegt daher die Aufgabe zugrunde, für die in ein Niederspannungs-Abgangsfeld eines Schaltschrankes eingeschobenen Sicherungsschaltleisten zur Verteilung elektrischer Energie eine Verriegelungseinrichtung zu schaffen, die für die Montageperson bzw. Bedienungsperson in jedem Fall ein sicheres spannungsfreies und doch einfaches schnelles Montieren und Auswechseln der einzelnen Sicherungsschaltleisten ermöglicht.

Diese Aufgabe wird gemäß der Erfindung mit den Maßnahmen des Kennzeichnungsteils des Anspruchs 1 gelöst. Vorteilhafte Ausgestaltungen sind in den Unteransprüche angegeben.

Bei der erfindungsgemäßen Verriegelungseinrichtung für die in ein Niederspannungs-Abgangsfeld eines Schaltschrankes eingeschobenen Sicherungslastschaltleisten weist jede Schaltleiste eine drehbar gelagerte Verriegelungs-Welle auf, welche an ihrem Umfang drei axial und umfangsmäßig zueinander versetzte Stellungsnocken aufweist, die mit in der Sicherungsschaltleiste angeordneten Anschlägen zusammenwirken, so daß durch manuelle Drehung der Verriegelungs-Welle um jeweils einen 90 °-Kreisbogenabschnitt die Welle und damit die Sicherungsschaltleiste in vier definierte Stellungen, nämlich Einfahren, Verriegeln, Trennen und Ausfahren der Sicherungsschaltleiste schaltbar ist. Auf diese Weise ist die Montageperson z. B. anläßlich des Auswechselns einer Sicherungsschaltleiste gesichert gegen Berührungsspannung sowie gegen die Durchführung unbeabsichtigter Montageschritte, weil bei der Montage und Demontage durch Verdrehung der Verriegelungs-Welle die o.g. bestimmte Reihenfolge von Montageschritten bzw. Demontageschritten zwangsweise einzuhalten ist.

Die Erfindung und deren weitere Merkmale und Vorteile werden anhand der in den Figuren schematisch dargestellten Ausführungsbeispiele näher erläutert.

Es zeigt:
- Fig. 1:: in Seitenansicht eine aus drei Modulen zusammensetzbare Niederspannungs-Schaltfeldeinrichtung mit mehreren integrierten Sicherungslastschaltleisten,
- Fig. 2:: die Ansicht von rechts auf die Vorderseite des rechten Frontteils der Schalteinrichtung der Fig. 1,
- Fig. 3:: ausschnittsweise vergrößert den Vertikalschnitt durch eine der Sicherungsschaltleisten mit eingebauter erfindungsgemäßer Verriegelungseinrichtung,
- Fig. 4-7:: in Seitenansicht auf die Verriegelungseinrichtung der Fig. 3 die Verriegelungs-Welle mit ihren drei Stellungsnocken in vier definierten unterschiedlichen Stellungen, und
- Fig. 8:: in perspektivischer Darstellung die in Fig. 3 zu sehende Montagewanne, mit der die Verriegelungseinrichtung in die Sicherungsschaltleiste eingebaut ist.

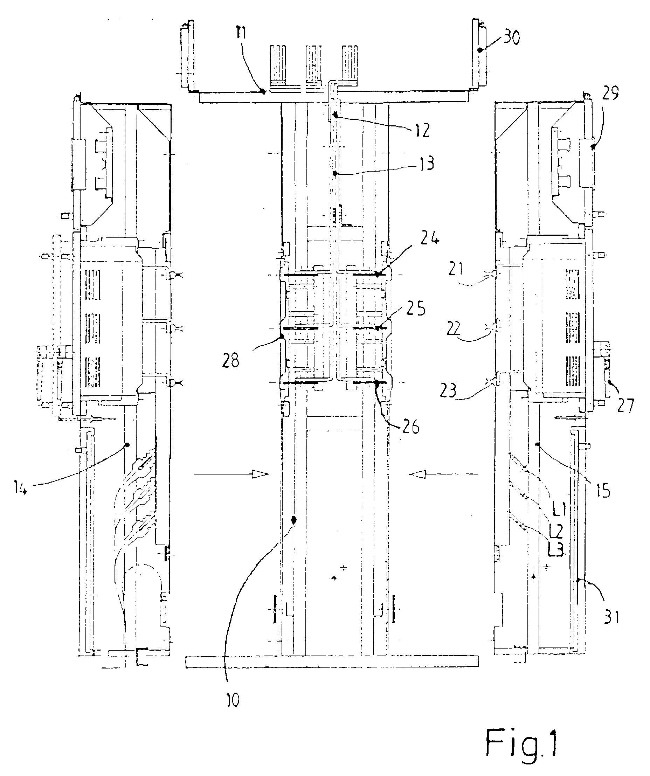

Nach Fig. 1 steht auf dem Boden z. B. einer Produktionshalle die Niederspannungs-Schaltfeldeinrichtung mit einem Mittelteil 10, das als Schienenträgergerüst an seiner Oberseite eine Stromversorgungs-Sammelschiene 11 trägt, deren Stromschienen über eine Verbindung 12 mit dem Stromführungssystem 13 des Mittelteils verbunden sind.

Die Sammelschiene 11 muß nur so lange spannungsfrei geschaltet werden, bis die Verbindung 12 in vergleichsweise kurzer Zeit montiert ist. Danach kann die Spannungsfrei-Schaltung der Sammelschiene 11 wieder aufgehoben werden, um eine möglicherweise eingetretene Betriebsunterbrechung in der Produktionshalle möglichst kurz zu halten.

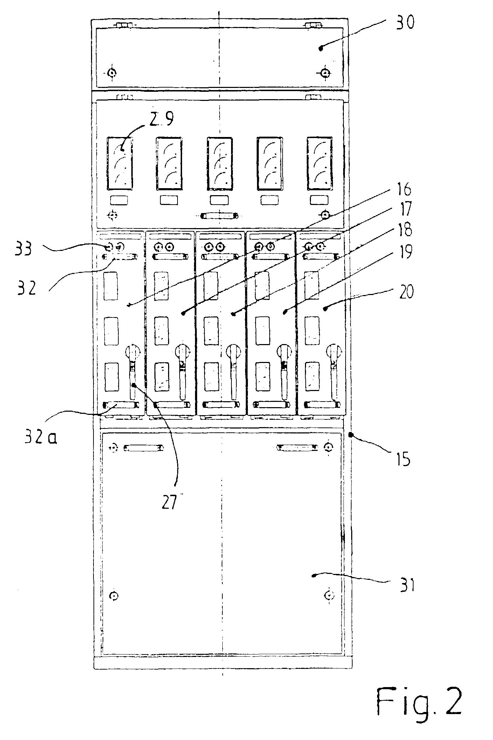

An das zentrale Mittelteil 10 ist an beiden sich gegenüberliegenden Seiten spiegelbildlich zueinander in Modulbauweise je ein Frontteil 14, 15 angebaut, wobei diese Frontteile 14, 15 in Fig. 1 in der vom Mittelteil 10 noch getrennten Stellung gezeigt sind. Aus der Ansicht der Fig. 2 auf das Frontteil 15 geht hervor, daß in dieses fünf nebeneinanderliegende Sicherungslastschaltleisten 16 bis 20 eingeschoben sind. Spiegelbildlich dazu können im anderen Frontteil 14 ebenfalls z. B. fünf Sicherungsschaltleisten angeordnet sein. Die Sicherungsschaltleisten weisen rückseitig elektrische Kontakte auf, z. B. jeweils drei Lyra-Kontakte 21, 22, 23, die nach Anbau des Frontteils 15 und in eingeschobener Stellung der jeweiligen Sicherungsschaltleisten 16 bis 20 mit entsprechenden Kontakten 24, 25, 26 des Mittelteils 10 verbindbar sind.

Die Sicherungsschaltleisten 16 bis 20 stehen im unteren Teil des Frontteils 14 bzw. 15 jeweils mit drei Stromabgängen L1, L2 und L3 in Verbindung, die zu einem Drehstromverbraucher wie z. B. Antriebsmotor einer Werkzeugmaschinen führen. Die Belegung der drei Stromabgänge L1 bis L3 mit entsprechenden Steckern ist in Fig. 1 zu sehen. An der Frontseite der Sicherungsschaltleisten 16 bis 20 ist jeweils ein Schalthebel 27 angeordnet, mit dem die einzelnen angeschlossenen Drehstromverbraucher zu schalten sind. Mit 28 ist eine Abdeckung angezeigt, die bei Nichtbenutzung der Kontakte 24, 25, 26 des Mittelteils 10 vor unbeabsichtigter Berührung schützt. Im oberen Teil der Frontteile 14, 15 ist jeweils ein Amperemeter 29 zum Anzeigen der auf die jeweilige Sicherungsschaltleiste verteilten Stromstärke (z. B. 630 A) eingebaut. Mit 30 ist eine Blende vor dem Raum der Sammelschiene 11 angezeigt. Mit 31 sind Abdeckungen für die Kabelanschlüsse an die Stromabgänge L1, L2, L3 angezeigt.

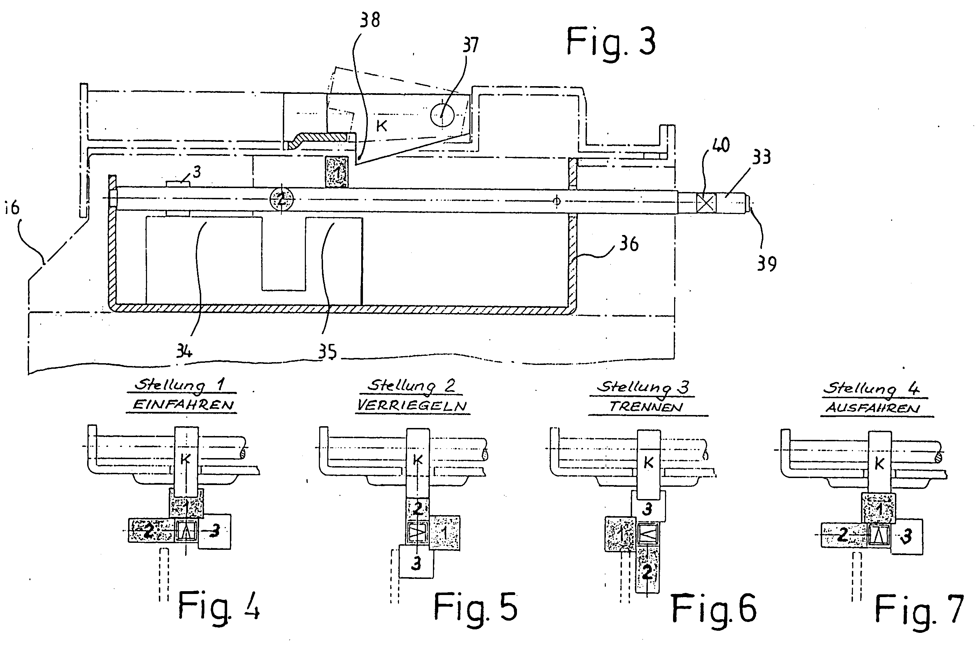

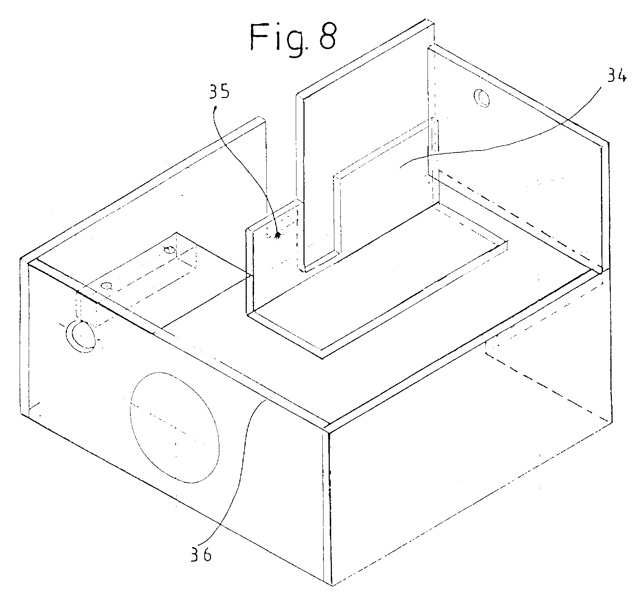

In Fig. 2 sieht man die Tragegriffe 32 und 32a der einzelnen in der Regel schwergewichtigen eingeschobenen Sicherungsschaltleisten 16 bis 20, zu deren Montage/Demontage, z. B. beim Auswechseln anläßlich eines Störungsfalles, von der Montageperson eine Verriegelungseinrichtung mit einer Verriegelungs-Welle 33 zu bedienen ist. Jede Sicherungsschaltleiste 16 bis 20 weist die drehbar gelagerte Verriegelungs-Welle 33 (Fig. 3) auf, welche an ihrem Umfang drei axial und umfangsmäßig zueinander versetzte Stellungsnocken 1, 2, 3 aufweist, die mit in der Sicherungsschaltleiste angeordneten Anschlägen 34, 35 zusammenwirken. Wie aus den Fig. 3 und 8 hervorgeht, sind die verdrehbare Verriegelungs-Welle 33 und deren Anschläge 34, 35 für die Stellungsnocken 2 und 3 in der Stellung 2 "Verriegeln" und Stellung 3 "Trennen" in einer Montagewanne 36 gelagert, die ihrerseits in die Sicherungsschaltleiste 16 eingebaut ist. Durch manuelle Drehung der Verriegelungs-Welle 33 um jeweils einen 90 °-Kreisbogenabschnitt ist die Welle und damit die Sicherungsschaltleiste 16 in die vier definierten Stellungen 1 "Einfahren", 2 "Verriegeln", 3 "Trennen" und 4 "Ausfahren" der Sicherungsschaltleiste 16 schaltbar. Diese vier unterschiedlichen Stellungen sind in den Fig. 4 bis 7 separat dargestellt.

Aus den Fig. 3 und 4 erkennt man, daß bei der Montage der Sicherungsschaltleiste 16, d. h. bei deren Einschieben in den Schaltschrank der Nocken 1 der Verriegelungs-Welle 33 eine mit einer Schrägfläche versehene, um ein Gelenk 37 schwenkbare Klinke K einer im Schaltfeldgerüst fest installierten Führungsleiste hochdrückt, wobei die Klinkennase 38 nach Erreichen der gezeigten Stellung "Einfahren" die Verriegelungs-Welle 33 arretiert. Die Verriegelungs-Welle 33 ragt mit ihrem Vorderende aus der Vorderwand der Sicherungsschaltleiste 16 heraus, mit einer optischen Drehstellungsanzeige 39 und mit einer Arbeitsfläche z. B. in Gestalt eines Vierkants 40, an dem ein entsprechendes Bedienungswerkzeug zur Drehverstellung der Verriegelungs-Welle 33 ansetzbar ist.

Nachdem die eingeschobene Sicherungsschaltleiste 16 ihre in Fig. 4 dargestellte Positionsstellung 1 "Einfahren" erreicht hat, wird durch weitere Drehung der Verriegelungs-Welle 33 um 90 ° die in Fig. 5 dargestellte Stellung 2 erreicht, in welcher die Sicherungsschaltleiste im Schaltschrank fest verriegelt ist. In der in Fig. 6 dargestellten Stellung 3 "Trennen" der Verriegelungs-Welle 33 ist die ausgeschaltete Sicherungsschaltleiste in ihre Trennstellung 3 herausgezogen, d. h. ein weiteres Herausziehen der Sicherungsschaltleiste 16 über die Trennstellung hinaus ist infolge Anschlages der Nocke 3 an der Klinkennase 38 nicht möglich. In der in Fig. 7 dargestellten weiteren Stellung 4 "Ausfahren" hat die Nocke 1 die Klinkennase 38 überwunden, d. h. in dieser Stellung kann die Sicherungsschaltleiste 16 ohne Gefahr von der Montageperson demontiert werden.

Die in den Fig. 4 bis 7 dargestellten unterschiedlichen vier Schaltstellungen der erfindungsgemäßen Verriegelungseinrichtung werden nochmals wie folgt erläutert:

*Fig. 4, Stellung 1:* Einfahren der Sicherungsschaltleiste 16 in die Betriebsstellung. Die Sicherungsschaltleiste muß ausgeschaltet sein (Schalthebel 27). Die Verriegelungs-Welle 33 verhindert ein Einfahren der eingeschalteten Leiste. Die Kontaktierung des Hauptstromkreises erfolgt über die Lyra-Kontakte 21, 22, 23. Die Signalisierung ist über eine automatische Steckverbindung geschaltet. Beim Einfahren der Sicherungsschaltleiste 16 wird mit der Klinke K, welche automatisch fällt, die Schaltleiste gesichert. Die Schaltleiste kann in dieser Betriebsstellung nicht mehr herausgezogen werden.

*Fig. 5, Stellung 2:* Die Sicherungsschaltleiste 16 ist in dieser für den Betrieb definierten Endstellung arretiert. Die Arretierung verhindert die Beeinträchtigung der Kontaktierung durch Erschütterungen beispielsweise in vibrierenden Räumen, und durch elektrische Laststöße.

*Fig. 6, Stellung 3:* In dieser Stellung kann die ausgeschaltete Sicherungsschaltleiste 16 (Schalthebel 27) in die Trennstellung gezogen werden. Die Sicherungsschaltleiste 16 ist elektrisch von der Anlage getrennt. Ein Herausziehen der Sicherungsschaltleiste über die Trennstellung 3 hinaus ist zum Schutz der Bedienungsperson nicht möglich. Andererseits kann in der Trennstellung 3 die Sicherungsschaltleiste 16 auch nicht eingeschoben werden, d. h. durch die Zwangsverriegelung ist eine Rückmontage der Sicherungsschaltleiste in die Betriebsstellung nicht möglich.

*Fig. 7, Stellung 4:* Die Sicherungsschaltleiste 16 kann aus dem Frontteil herausgezogen werden. Eine fingersichere Abdeckung verhindert ein zufälliges Berührung der unter Spannung stehenden Kupferschienen.

Die erfindungsgemäße Verriegelungseinrichtung ermöglicht eine gefahrlose Montage und Demontage der Sicherungsschaltleisten, ohne daß besondere Montagewerkzeuge eingesetzt werden müssen.

## Patentansprüche

1. Verriegelungseinrichtung für die in ein Niederspannungs-Abgangsfeld eines Schaltschrankes eingeschobenen Sicherungslastschaltleisten zur Verteilung elektrischer Energie auf mehrere Drehstromverbraucher, dadurch gekennzeichnet, daß jede Sicherungsschaltleiste (16 bis 20) eine drehbar gelagerte Verriegelungs-Welle (33) aufweist, welche an ihrem Umfang drei axial und umfangsmäßig zueinander versetzte Stellungsnocken (1, 2, 3) aufweist, die mit in der Sicherungsschaltleiste angeordneten Anschlägen (34, 35) zusammenwirken, so daß durch Drehung der Verriegelungs-Welle (33) um jeweils einen 90 °-Kreisbogenabschnitt die Welle und damit die Sicherungsschaltleiste in vier definierte Stellungen (1) Einfahren, (2) Verriegeln, (3) Trennen und (4) Ausfahren der Sicherungsschaltleisten (16 bis 20) schaltbar ist.

2. Verriegelungseinrichtung nach Anspruch 1, dadurch gekennzeichnet, daß der Nocken (1) der Verriegelungs-Welle (33) in deren Stellung "Einfahren" mit einer um ein Gelenk (37) schwenkbaren Klinke (K) zusammenwirkt, deren Nase (38) nach Erreichen der Stellung "Einfahren" die Verriegelungs-Welle (33) arretiert.

3. Verriegelungseinrichtung nach Anspruch 1, dadurch gekennzeichnet, daß die verdrehbare Verriegelungs-Welle (33) und deren Anschläge (34, 35) für die Stellungsnocken (2 und 3) in der Stellung (2) "Verriegeln" und Stellung (3) "Trennen" in einer Montagewanne (36) gelagert sind, die ihrerseits in die Sicherungsschaltleiste (16 etc.) eingebaut ist.

4. Verriegelungseinrichtung nach Anspruch 1, dadurch gekennzeichnet, daß in der Stellung (3) "Trennen" der Verriegelungs-Welle (33) die ausgeschaltete Sicherungsschaltleiste in ihre Trennstellung (3) herausgezogen ist, ein weiteres Herausziehen der Sicherungsschaltleiste (16) über die Trennstellung hinaus infolge Anschlages der Nocke (3) an der Klinkennase (38) nicht möglich ist.

5. Verriegelungseinrichtung nach einem oder mehreren der Ansprüche 1 bis 4, dadurch gekennzeichnet, daß die Verriegelungs-Welle (33) mit ihrem Vorderende aus der Vorderwand der Sicherungsschaltleiste (16) herausragt mit einer optischen Drehstellungsanzeige (39) und mit einer Arbeitsfläche z. B. in Gestalt eines Vierkants (40), an dem ein entsprechendes Bedienungswerkzeug zur Drehverstellung der Verriegelungs-Welle (33) ansetzbar ist.
